(19) Europäisches Patentamt
European Patent Office
Office européen des brevets

(11) **EP 4 331 068 B1**

(12) **EUROPEAN PATENT SPECIFICATION**

(45) Date of publication and mention
of the grant of the patent:
**01.04.2026 Bulletin 2026/14**

(51) International Patent Classification (IPC):
**H02B 1/56** *(2006.01)* **H02B 11/04** *(2006.01)*

(21) Application number: **21726453.0**

(52) Cooperative Patent Classification (CPC):
**H02B 1/56; H02B 11/04**

(22) Date of filing: **29.04.2021**

(86) International application number:
**PCT/IB2021/053579**

(87) International publication number:
**WO 2022/229678 (03.11.2022 Gazette 2022/44)**

(54) **AN ARRANGEMENT AND A METHOD FOR CONTROLLING TEMPERATURE IN A SWITCHGEAR USING THERMOELECTRIC DEVICES**

ANORDNUNG UND VERFAHREN ZUR REGELUNG DER TEMPERATUR IN EINER SCHALTANLAGE MIT THERMOELEKTRISCHEN GERÄTEN

ARRANGEMENT ET MÉTHODE POUR CONTRÔLER LA TEMPÉRATURE DANS UN APPAREILLAGE DE COMMUTATION AVEC DISPOSITIFS THERMOÉLECTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2024 Bulletin 2024/10**

(73) Proprietor: **ABB SCHWEIZ AG**
**5400 Baden (CH)**

(72) Inventors:
• **BHANDARI, Sachin, Shivaranjan**
**Nashik, Maharashtra 422009 (IN)**
• **GOVINDARAJ, Selvakumar**
**Nashik, Maharashtra 422007 (IN)**
• **SONONE, Ujval, Ramkrishna**
**Nashik, Maharashtra 422010 (IN)**

(74) Representative: **Zimmermann & Partner Patentanwälte mbB**
**Postfach 330 920**
**80069 München (DE)**

(56) References cited:
**WO-A1-2016/116410 WO-A1-2020/209509 KR-B1- 101 226 635**

**Description**

## FIELD OF INVENTION

The embodiment herein generally relates to a temperature control in a switchgear. Particularly, the present invention provides an arrangement and a method for controlling temperature in the switchgear using thermoelectric devices.

## BACKGROUND AND PRIOR ART

Generally, a switchgear is a collection of electrical components accommodated in an enclosure (housing) to control, regulate, protect and isolate one or more electrical equipment provided in an electrical power system. The switchgears are mainly used in an electrical power transmission and distribution systems. The electrical components in the switchgear includes but are not limited to electrical switches, circuit breakers, fuses, isolators, relays, current and potential transformers, indicating instruments, lightning arresters and control panels. During an operating condition, some electrical equipment such as generators, transmission and distribution systems may generate/dissipate heat when connected to a high power sources or grids. Especially, during operation at load current, heat is generated at contacts of the electrical equipment that is equal to $I^2R_1$ loss, where 'I' represents a value of the load current and '$R_1$' is a resistance of the contact. Similarly, a current carrying conductor generates heat equal to $I^2R_2$, where 'I' represents the value of load current and '$R_2$' is the resistance of the conductor. As the value of the load current increases, the heat generated at the contacts and from the conductor increases. According to a governing standard like IEC, etc. limits of a maximum temperature and a temperature rise (i.e. above ambient temperature) are specified for the switchgear. For instance, when there is a higher heat generation due to a higher load current, then it may increase a complexity for controlling the maximum temperature and the temperature rise of the switchgear within specified limits.

Conventionally, such instances are avoided by implementing a natural cooling or a forced cooling inside the enclosure of the switchgear. Mostly air is used as a preferred coolant for the enclosure of the switchgear. However, controlling the temperature rise inside the enclosure of the switchgear is a challenging task from a design perspective. Because, for higher currents (a range above 3150A) switchgear, a challenge from the design perspective is to perform a close bargain between high cross-sections, a size of a switchgear panel and critical distances for achieving a preferred dielectric performance. In such a scenario, controlling the temperature rise inside the enclosure is complicated.

To overcome the complications, parameters that influences the temperature rise in the switchgear are considered for evaluation. The parameters that influences the temperature rise includes but are not limited to current rating of the electrical component, material of a conductor, cross section of the conductor, air flow in the enclosure, a temperature of a media around a conducting surface. Specifically for the higher currents (a range above 3150A) switchgear, the current rating of the electrical component, the material of a conductor and the cross section of the conductor are invariable. In a medium voltage switchgear, a selection of a higher cross section of the conductor leads to an increase in size and cost of the switchgear. Therefore, the parameters that influences the temperature rise in the switchgear related to the airflow in the enclosure and the temperature of the media around the conducting surface is considered for controlling the temperature rise. In addition, enhancement of heat transfer from the conductors and/or the airflow and a selection of an appropriate material for the conductors can improve a heat transfer co-efficient 'h'(W/m$^2$). According to a heat transfer theory, increase in the heat transfer coefficient by 5 units leads to a reduction of 10-15 Degree Celsius in the temperature rise.

Considering the enhancement of the airflow, a selection of a cooling technique is a subsequent option. For instance, if the natural cooling is implemented in the medium voltage switchgear, there may be an increase in the temperature rises due to an insufficient airflow or circulation. In addition, there is no medium through which the airflow can be directed and as a result enhancing the airflow is difficult.

For example: patent application, WO 2020/209509 A1, describes a device for preventing temperature rise of an air circuit breaker; patent KR 101 226 635 B1, describes a distributing board with improved cooling effect, and patent application WO2016/116410A1 discloses a cooling arrangement for a switchgear. Therefore, there is a need for an arrangement and a method for controlling the temperature rise in the switchgear.

## SUMMARY OF THE INVENTION

It is an object of the present disclosure to mitigate, alleviate or eliminate one or more of the above-identified deficiencies and disadvantages in the prior art and solve at least the above-mentioned problem.

The invention is set out in the appended set of claims. In view of the foregoing, an embodiment herein provides a first aspect of an arrangement for controlling temperature in a switchgear using thermoelectric devices and a second aspect of a method for controlling temperature in a switchgear using thermoelectric devices.

According to the first aspect of the invention, the arrangement for controlling temperature in a switchgear using thermoelectric devices comprises one or more contacts of a switchgear panel and at least one thermoelectric device. The one or more contacts of a switchgear panel transfer a heat generated in the switchgear. The at least one thermoelectric device comprising a first base and second base. The at least one thermoelectric device is mounted on each of the one or more contacts of the switchgear panel to remove heat from the one or more contacts of the switchgear panel. The heat from the one or more contacts of the switchgear panel is removed by creating a temperature difference on the first base and second base.

According to the first aspect of the invention, the one or more contacts of the switchgear panel includes at least one contact pin that comprises at least two ends. One end of the at least one contact pin is connected to at least one incoming/outgoing terminal of a busbar system and another end of the at least one contact pin is connected to at least one tulip cluster contact of at least one incoming/outgoing terminal of at least one moving contact of a circuit breaker, both pertaining to the switchgear panel. The at least one moving contact of the circuit breaker generates and transfers the heat to the at least one contact pin. The at least one contact pin is considered as a hot region of the switchgear.

According to the first aspect of the invention, the at least one thermoelectric device is mounted in an inner periphery of a cavity provided in the at least one contact pin. The first base of the at least one thermoelectric device is positioned towards the at least one contact pin. The second base of the at least one thermoelectric device is positioned towards a region in the switchgear, thereby to create the temperature difference on the first base and second base of the at least one thermoelectric device. A temperature of the first base is higher than temperature of the second base of the at least one thermoelectric device and the region in the switchgear is at a relatively low temperature when compared to a temperature of the at least one contact pin.

According to an embodiment, the arrangement further comprises at least one fan activated using a generated electric power from the at least one thermoelectric device due to the temperature difference that is created on the first base and second base of the at least one thermoelectric device by Seebeck effect. The at least one fan activates a forced cooling around the at least one contact pin of the panel and the at least one moving contact of the circuit breaker.

According to an embodiment, the at least one fan is positioned in the cavity provided in the at least one contact pin along with the at least one thermoelectric device. The second base of the at least one thermoelectric device is positioned towards an outer periphery of the at least one fan to create the relatively low temperature when compared to the temperature of the at least one contact pin. The at least one fan is further attached to at least one heat sink over a plurality of jumpers to drive-out the heat further away from the at least one contact pin and the at least one tulip cluster contact. The plurality of jumpers are provided in between the at least one fan (105a, 105b) and the at least one contact pin (106a, 106b).

According to an embodiment, the at least one fan is made of material that comprises a thermoplastic or metal alloys and the one or more contacts are made of material that includes aluminum, copper or metal alloys.

According to another embodiment, the at least one thermoelectric device is mounted in the inner periphery of the cavity provided in the at least one contact pin. The at least one thermoelectric device is connected to an external power supply to create the temperature difference on the first base and second base of the at least one thermoelectric device. A temperature of the first base is higher than temperature of the second base of the at least one thermoelectric device.

According to another embodiment, the second base of the at least one thermoelectric device is positioned in the inner periphery of the cavity provided in the at least one contact pin of the switchgear. The first base of the at least one thermoelectric device is positioned towards at least one heat sink thereby to remove the heat from the at least one contact pin and the at least one moving contact of the circuit breaker by absorbing and releasing the heat generated in the switchgear by Peltier effect. The at least one heat sink is attached on to a plurality of jumpers provided over the at least one contact pin.

According to an embodiment, the heat transferred at the one or more contacts is driven-out using a dielectric media that includes SF6, air, vacuum, other gases or fluids. In an aspect, the dielectric media can have a heat pipe in the switchgear panel to drive-out the heat from the one or more contacts of the switchgear panel. In another aspect, the dielectric media may not have the heat pipe in the switchgear panel to drive-out the heat from the one or more contacts of the switchgear panel.

According to an embodiment, a means is provided in the switchgear to determine an operation of the at least one thermoelectric device and/or the at least one fan externally by determining the temperature difference created in the at least one thermoelectric device.

According to a second aspect of the invention, a method for controlling temperature in a switchgear using thermoelectric devices comprises the steps of, mounting at least one thermoelectric device on each of one or more contacts of a switchgear panel. The one or more contacts of the switchgear panel transfer heat generated in the switchgear. The at least one thermoelectric device comprising a first base and a second base. The method for controlling temperature in a switchgear by thermoelectric devices comprises the steps of creating a temperature difference on the first base and second base of the at least one thermoelectric device and removing heat from the one or more contacts of the switchgear panel.

According to the second aspect of the invention, the one or more contacts of the switchgear panel in the switchgear includes at least one contact pin and that comprises at least two ends. One end of the at least one contact pin is connected to at least one incoming/outgoing terminal of a busbar system and another end of the at least one contact pin is connected to at least one tulip cluster contact of at least one incoming/outgoing terminal of at least one moving contact of a circuit breaker. The at least one moving contact of the circuit breaker generates and transfers the heat to the at least one contact pin. The at least one contact pin is at a hot region of the switchgear.

According to the second aspect of the invention, the method further comprises, mounting the at least one thermoelectric device in an inner periphery of a cavity provided in the at least one contact pin. The mounting the at least one thermoelectric device comprises positioning the first base of the at least one thermoelectric device towards the at least one contact pin and positioning the second base of the at least one thermoelectric device towards a region in the switchgear. The mounting the at least one thermoelectric device in the inner periphery of the cavity can create the temperature difference on the first base and second base of the at least one thermoelectric device. A temperature of the first base is higher than temperature of the second base of the at least one thermoelectric device. The region in the switchgear is at a relatively low temperature when compared to temperature of the at least one contact pin.

According to an embodiment, the method further comprises, providing at least one fan for utilizing a generated electric power from the at least one thermoelectric device and activating a forced cooling around the at least one contact pin and the at least one moving contact of the circuit breaker. The generated electric power from the at least one thermoelectric device is due to the temperature difference that is created on the first base and second base of the at least one thermoelectric device by Seebeck effect.

According to another embodiment, the method further comprises, mounting the at least one thermoelectric device in an inner periphery of a cavity provided in the at least one contact pin; and connecting the at least one thermoelectric device to an external power supply. The at least one thermoelectric device that is connected to the external power supply may create the temperature difference on the first base and second base of the at least one thermoelectric device. A temperature of the first base is higher than temperature of the second base of the at least one thermoelectric device. The mounting the at least one thermoelectric device further comprises: positioning the second base of the at least one thermoelectric device in the inner periphery of the cavity provided in the at least one contact pin of the switchgear, and positioning the first base of the at least one thermoelectric device towards at least one heat sink. The mounting the at least one thermoelectric device may remove the heat from the at least one contact pin and the at least one moving contact of the circuit breaker by absorbing and releasing the heat generated in the switchgear by Peltier effect. The at least one heat sink is attached on to a plurality of jumpers provided over the at least one contact pin.

Effects and features of the second aspect are to a large extent analogous to those described above in connection with the first aspect. Embodiments mentioned in relation to the first aspect are largely compatible with the second aspect.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

The present disclosure will become apparent from the detailed description given below. These and other aspects of the embodiments and other objects and advantages of the present invention herein will be better appreciated and understood when considered in conjunction with the following description and the accompanying drawings. The accompanying drawings are incorporated for illustration of preferred embodiments of the present invention and are not intended to limit the scope thereof. It should be understood, however, that the following descriptions, while indicating preferred embodiments and numerous specific details thereof, are given by way of illustration and not of limitation. Different configuration changes and modifications may be made within the scope of the embodiments herein, always within the scope of protection defined by the claims.

## BRIEF DESCRIPTION OF DRAWINGS

The detailed description is set forth with reference to the accompanying figures. In the figures, the leftmost digit(s) of a reference number identifies the figure in which the reference number first appears. The use of the same reference numbers in different figures indicates similar or identical items.

Fig.1 illustrates a cross-sectional view of a switchgear panel with an arrangement for controlling temperature in a switchgear, according to a first aspect of an embodiment herein;

Fig.2 illustrates a perspective view of a fan utilized for controlling the temperature in the switchgear, according to a first aspect of an embodiment herein;

Fig.3 illustrates a front perspective view of an arrangement for controlling the temperature in the switchgear, according to a first aspect of an embodiment herein;

Fig.4 illustrates a sectional rear perspective view of an arrangement for controlling the temperature in the switchgear, according to a first aspect of an embodiment herein;

Fig.5 illustrates a rear perspective view of an arrangement for controlling the temperature in the switchgear, according to a first aspect of an embodiment herein;

Fig.6 illustrates a method for controlling temperature in a switchgear using thermoelectric devices, according to a second aspect of an embodiment herein;

Fig.7a illustrates a graph showing a variation of an average heat transfer coefficient in a free airflow condition with respect to temperature difference, according to a prior art reference;

Fig.7b illustrates a simulation model of an arrangement for correlating a heat transfer coefficient and surrounding temperature difference in the free airflow condition, according to a first aspect of an embodiment herein;

Fig.8a illustrates a graph showing a variation of an average heat transfer coefficient with airflow of 1m/s with respect to temperature difference, according to a prior art reference.

Fig.8b illustrates a simulation model of an arrangement for correlating a heat transfer coefficient and surrounding temperature difference at the airflow of 1m/s, according to a first aspect of an embodiment herein;

Fig.9a illustrates a graph showing a variation of an average heat transfer coefficient with the air flow of 2m/s with respect to temperature difference, according to a prior art reference;

Fig.9b illustrates a simulation model of an arrangement for correlating a heat transfer coefficient and surrounding temperature difference with the airflow of 2m/s, according to a first aspect of an embodiment herein;

Fig.10a illustrates a graph showing a variation of an average heat transfer coefficient with air flow of 3m/s with respect to temperature difference, according to a prior art reference; and

Fig.10b illustrates a simulation model of an arrangement for correlating a heat transfer coefficient and surrounding temperature difference at airflow of 3m/s, according to a first aspect of an embodiment herein;

## DETAILED DESCRIPTION OF THE PREFERRED EMBODIMENTS

The embodiments herein and the various features and advantageous details thereof are explained more fully with reference to the non-limiting embodiments and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

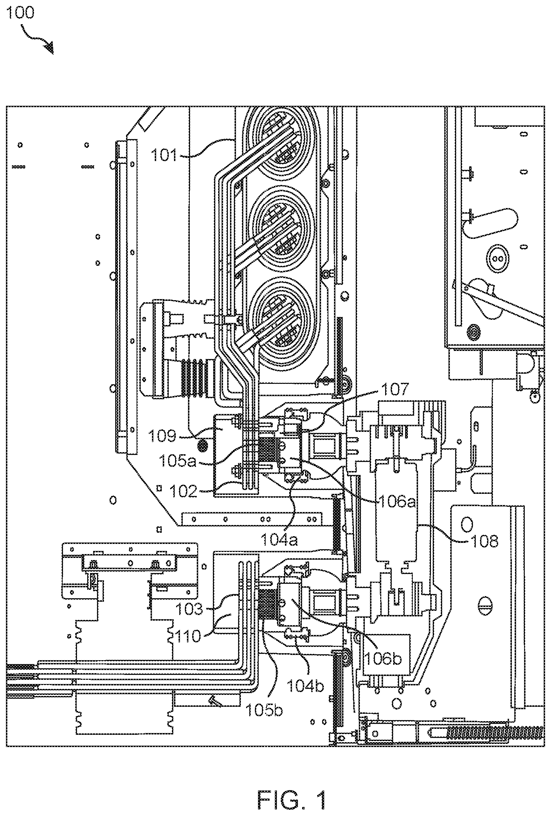

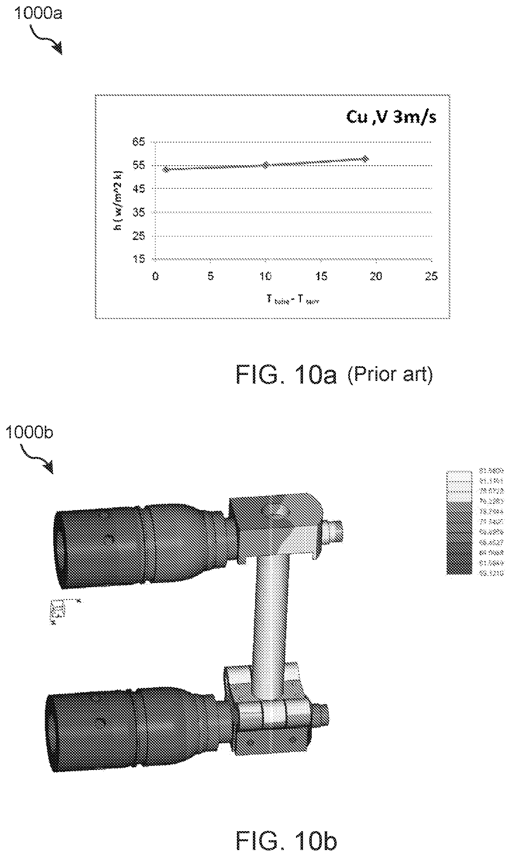

As mentioned above, there is a need for an arrangement and method for controlling temperature in a switchgear to improve the heat transfer co-efficient by enhancing the airflow. The embodiments herein achieve this by providing an arrangement and method for controlling temperature in a switchgear using thermoelectric devices. Referring now to the drawings, and more particularly to FIGS. 1 through 10a and 10b, where similar reference characters denote corresponding features consistently throughout the figures, there are shown preferred embodiments.

Fig.1 illustrates a cross-sectional view of a switchgear panel with an arrangement for controlling temperature in a switchgear, according to a first aspect of an embodiment. The thermoelectric devices or modules are operated based on a principle of thermoelectric effects such as Peltier effect, Seebeck effect, Thomson effect. The thermoelectric devices can be utilized for heating or cooling purposes, or for power generation. The Seebeck effect is a conversion of a temperature gradient across junctions of two dissimilar metals to electrical voltage. When the temperature gradient across junctions of two dissimilar metals are developed, the Seebeck effect can generate an electromotive force (emf) $E_{emf}$. The generated emf leads to measurable currents or voltages. A current density 'J' is given by

$$J = \sigma(-\nabla V + E_{emf})$$

where V is the measurable voltage, and sigma '$\sigma$' is a conductivity of a material/ two dissimilar metals. In terms of temperature difference and based on a creation of the emf, the Seebeck effect can be described as,

$$E_{emf} = -S\nabla T$$

where S is a Seebeck coefficient (also referred as thermo-power), which is a property of a material and VT is the temperature gradient.

The Peltier effect is a conversion of the electrical voltage into the temperature gradient across the junctions of the two dissimilar metals. For example, when a voltage is applied to a thermoelectric device or a Peltier cooler, heat is transferred from one side/base of the Peltier cooler to the other side/base of the Peltier cooler due to a diffusion of charge carriers, thus creating a temperature difference.

The switchgear is a collection of electrical components accommodated in a switchgear panel to control, regulate, protect and isolate one or more electrical equipment provided in an electrical power system. The switchgear panel can be referred as an enclosure, a housing, a panel, or a control panel. The switchgear panel includes but are not limited to one or more contacts, a busbar system/ connections for a single phase or three phase power supply, an incoming terminal of the busbar connections, an outgoing terminal of the busbar connections, a circuit breaker, a surge arrestor, a bushings, insulators, indicating instruments, a heat pipe, coolant media, a cluster of tulip fingers, a fan, one or more contact pin, a Peltier cooler or a thermoelectric device and so on. The cluster of tulip fingers are provided as a moving part of the circuit breaker and can be referred as a tulip cluster contact.

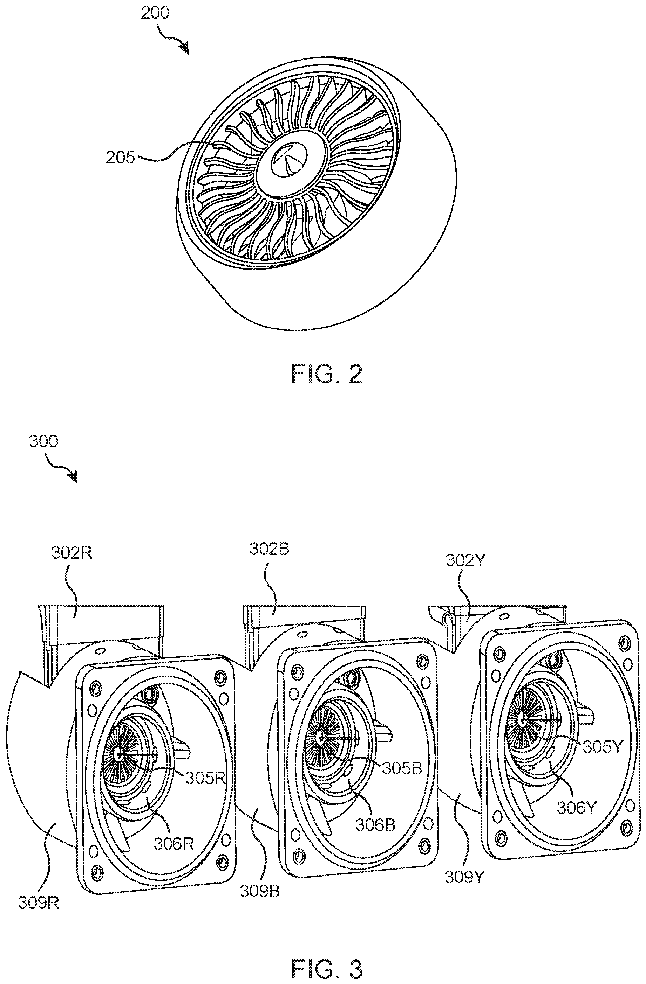

According to an embodiment, the arrangement for controlling temperature in a switchgear using thermoelectric devices/modules comprises one or more contacts of a switchgear panel 100, a thermoelectric device 107, moving contacts of a circuit breaker 108, a fan 105a, 105b, a busbar 101 and busbar connections for each phase. A perspective view of the fan 105a, 105b is described in conjunction with Fig. 2. Each incoming terminal 102 of a three phase Busbar system are connected to each of a corresponding phase's bushing (spout) 109 of the contact pin 106a, 106b. The one or more contacts of the switchgear panel 100 includes a contact pin 106a, 106b. The moving contacts includes a cluster of tulip finger contacts 104a, 104b connected to the circuit breaker 108. The one or more contacts of a switchgear panel 100 transfers heat generated in the switchgear. The one or more contacts includes moving and fixed contacts of the switchgear panel. Especially, the one or more contacts includes but is not limited to contact pins of a circuit breaker, bolts that join links to the contact pin and a moving contact of the circuit breaker (CB), jumper and the busbar connection, a busbar to the busbar connections, joints, and power current carrying links, or the like.

According to the invention, the thermoelectric device 107 comprises a first base and second base. The thermoelectric device 107 is mounted on each of the one or more contacts of the switchgear panel 100. The thermoelectric device 107 can act as a thermoelectric generator in an embodiment, when the purpose is generation of emf. The thermoelectric device 107 can act as a thermoelectric cooler in another (alternative) embodiment, when the purpose is cooling or heat absorption.

According to the invention, the contact pin 106a, 106b comprises at least two ends. One end of the contact pin 106a, 106b is connected to incoming 102 or outgoing terminal 103 of a busbar system 101. The one end of the contact pin 106a, 106b includes an outer covering 109, 110 at the incoming 102 or outgoing terminal 103 of the busbar system 101 to isolate the busbar connections for each phase of a power supply. Another end of the contact pin 106a,106b is connected to a tulip cluster contact of an incoming 104a or outgoing terminal 104b of the moving contact of the circuit breaker 108. The moving contact of the circuit breaker 108 generates and transfers heat to the contact pin 106a, 106b. The contact pin 106a, 106b is considered as a hot region of the switchgear.

According to the invention, the thermoelectric device 107 is mounted in an inner periphery of a cavity provided in the contact pin 106a, 106b. The first base of the thermoelectric device 107 is positioned towards the contact pin 106a, 106b. The second base of the thermoelectric device 107 is positioned towards a region in the switchgear, thereby to create the temperature difference on the first base and second base of the thermoelectric device 107. The thermoelectric device generates electric voltage or emf due to the temperature difference that is created on the first base and second base of the thermoelectric device by the Seebeck effect. A temperature of the first base is higher than a temperature of the second base of the thermoelectric device 107 and the region in the switchgear is at a relatively low temperature when compared to temperature of the contact pin 106a,106b.

The fan 105a, 105b is activated using the generated electric power (low voltage) from the thermoelectric device 107 due to the temperature difference that is created on the first base and second base of the thermoelectric device 107 by Seebeck effect. The fan 105a, 105b activates a forced cooling around the contact pin 106a, 106b of the switchgear panel 100 and the moving contact of the circuit breaker 108. The fan can be mounted at a suitable place in the switchgear panel, near to a placement of the thermoelectric device.

According to an embodiment, as shown in Fig.1 the fan 105a, 105b is positioned in the cavity provided in the contact pin 106a, 106b along with the thermoelectric device 107. The second base of the thermoelectric device 107 is positioned towards an outer periphery of the fan 105a, 105b to create the relatively low temperature when compared to the temperature of the contact pin 106a, 106b. The fan 105a, 105b is further attached to a heat sink (not shown in figures) over a plurality of jumpers to drive-out the heat further away from the contact pin 106a, 106b and the tulip finger/cluster contact 104a, 104b. The plurality of jumpers (not shown in figures) are provided in between the at least one fan (105a, 105b) and the at least one contact pin (106a, 106b). Thus, heat transfer from the one or more contacts and/or the airflow can be enhanced with the implementation of the forced cooling using the fan by creating the temperature difference on the thermoelectric device. The one or more contacts are made of material that includes but is not limited to aluminum, copper, metal alloys and the like. When considering cost and performance, as per prevailing practice in the medium voltage switchgear, copper is selected as a conducting material or material for the one or more contacts.

According to an embodiment, a means or a controller is provided in the switchgear to determine an operation of the thermoelectric device 107 and/or the fan 105a, 105b externally by determining the temperature difference created in the thermoelectric device 107. According to an embodiment, the heat transferred at the one or more contacts is drive-out using a dielectric media that includes SF6, air, vacuum, other gases or fluids. In an aspect, the dielectric media can have a heat pipe in the switchgear panel 100 to drive-out the heat from the one or more contacts of the switchgear panel 100. For example, the dielectric media can be used as a working fluid for the heat pipe to improve a heat transfer rate or thermal conductivity. In another aspect, the dielectric media may not have the heat pipe in the switchgear panel 100 to drive-out the heat from the one or more contacts of the switchgear panel 100.

Fig.2 illustrates a perspective view 200 of a fan 205 utilized for controlling the temperature in the switchgear, according to a first aspect of an embodiment. According to an embodiment, the arrangement (as described in fig.1) further comprises fan 205 (referred to fan 105a, 105b of Fig. 1). The fan 105a, 105b is made of material that includes but is not limited to thermoplastic, metal alloys and so on.

Fig.3 illustrates a front perspective view 300 of an arrangement as described in the Fig.1, according to a first aspect of an embodiment. According to an embodiment, for each phase of Busbar connections, a fan 305R, 305B, 305Y is positioned in the cavity provided in a contact pin 306R, 306B, 306Y along with the thermoelectric device (not shown). Each incoming terminal 302R, 302B, 302Y of a three phase busbar system are connected to each of a corresponding phase's bushing (spout) 309R, 309B, 309Y of the contact pin 306R, 306B, 306Y.

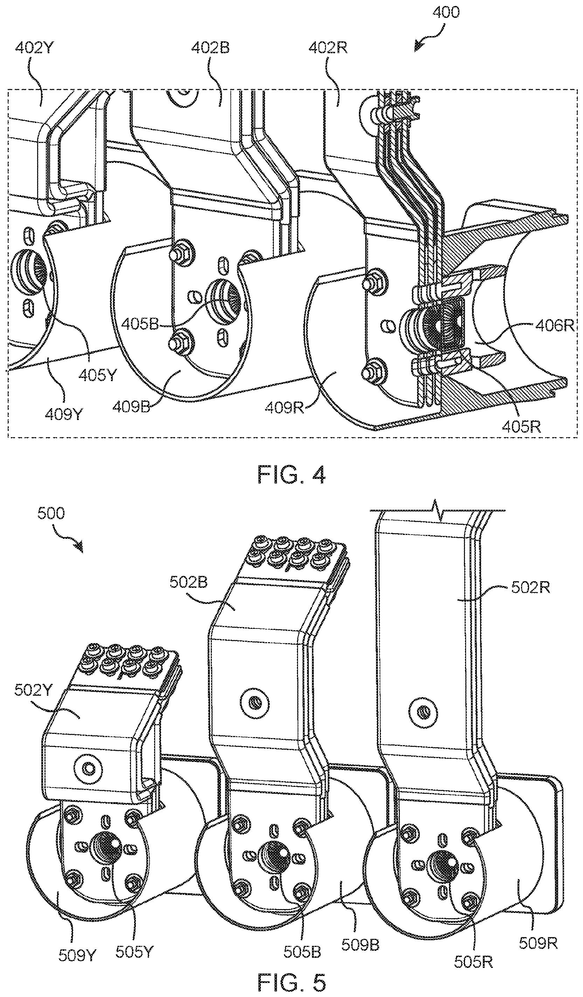

Fig.4 illustrates a sectional rear perspective view 400 of an arrangement as described in the Fig.1, according to a first aspect of an embodiment. According to an embodiment, a fan 405R, 405B, 405Y is positioned in the cavity provided in a contact pin 406R along with the thermoelectric device (not shown). Each incoming terminal 402R, 402B, 402Y of a three phase Busbar system are connected to each of a corresponding phase's bushing (spout)409R, 409B, 409Y of the contact pin 406R.

Fig.5 illustrates a rear perspective view 500 of an arrangement as described in the Fig.1, according to a first aspect of an embodiment. According to an embodiment, a fan 505R, 505B, 505Y for each phase is positioned in the cavity provided in a contact pin of the each phase along with the thermoelectric device (not shown). Each incoming terminal 502R, 502B, 502Y of a three phase Busbar system are connected to each of a corresponding phase's bushing (spout)509R, 509B, 509Y of the contact pin.

According to another embodiment with reference to Fig.1, the thermoelectric device 107 comprises the first base and the second base. The thermoelectric device 107 is mounted suitably on each of the one or more contacts of the switchgear panel 100. Thus, the thermoelectric device 107 is mounted on each of the one or more contacts of the switchgear panel 100. The one or more contacts of the switchgear panel 100 includes a contact pin 106a, 106b that comprises at least two ends. The thermoelectric device 107 can be a thermoelectric generator in the below described another embodiment. The one or more contacts includes moving and fixed contacts of the switchgear panel. Especially, the one or more contacts includes but is not limited to contact pins of a circuit breaker, bolts that join links to the contact pin and a moving contact of the circuit breaker (CB), jumper and the busbar connection, a busbar to the busbar connections, joints, and power current carrying links. The thermoelectric device 107 is connected to an external power supply (not shown in figures) to create the temperature difference on the first base and second base of the thermoelectric device 107. The thermoelectric device 107 is mounted in the one or more contacts of the switchgear panel 100. A temperature of the first base is higher than a temperature of the second base of the thermoelectric device 107. The external power supply can be provided to the thermoelectric device using an external Direct Current (DC) source or Alternate Current (AC) source.

According to the invention, the thermoelectric device 107 is mounted in the inner periphery of the cavity provided in the contact pin 106a, 106b. The second base of the thermoelectric device 107 is positioned in the inner periphery of the cavity provided in the contact pin 106a, 106b of the switchgear. The first base of the thermoelectric device 107 is positioned towards a heat sink thereby to remove heat from the contact pin 106a,106b and the moving contact of the circuit breaker 108 by absorbing and releasing the heat generated in the switchgear by Peltier effect. The heat sink is attached on to a plurality of jumpers provided over the contact pin 106a, 106b. Thus, heat transfer from the one or more contacts and/or the airflow can be enhanced with the implementation of a forced cooling using the temperature difference. According to another embodiment, a means or a controller is provided in the switchgear to determine an operation/ operating condition of the thermoelectric device 107. The operating condition can be determined by determining the temperature of the first and second bases of the thermoelectric device using sensors such as thermocouple.

According to another embodiment, the heat transferred at the one or more contacts is drive-out using a dielectric media that includes SF6, air, vacuum, other gases or fluids. In an aspect, the dielectric media can have a heat pipe in the switchgear panel 100 to drive-out the heat from the one or more contacts of the switchgear panel 100. For example, the dielectric media can be used as a working fluid for the heat pipe to improve the heat transfer coefficient or a thermal conductivity. In another aspect, the dielectric media may not have the heat pipe in the switchgear panel 100 to drive-out the heat from the one or more contacts of the switchgear panel 100.

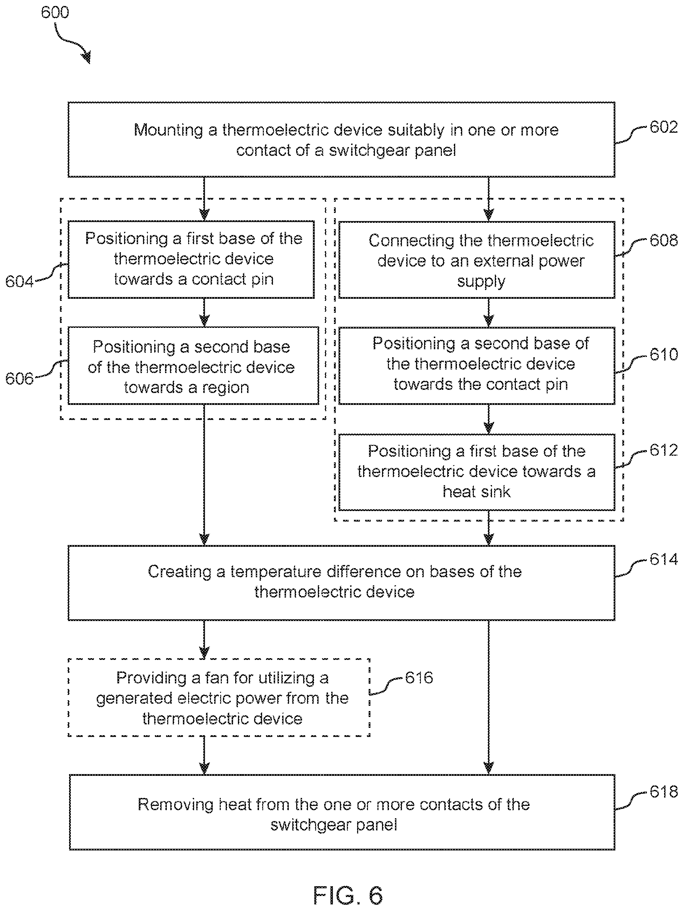

Fig.6 illustrates a method 600 for controlling temperature in a switchgear using thermoelectric devices, according to a second aspect of an embodiment. The methods that are illustrated in Fig. 6, as a collection of operations in a logical flow graph representing a sequence of operations that can be implemented in hardware, software, firmware, or a combination thereof. The order in which the methods are described is not intended to be construed as a limitation, and any number of the described method blocks can be combined in any order to implement the methods, or alternate methods. Additionally, individual operations may be deleted from the methods without departing from the scope of the subject matter described herein. In the context of software, the operations represent computer instructions that, when executed by one or more processors, perform the recited operations.

According to the second aspect of the invention, a method 600 for controlling temperature in a switchgear using thermoelectric devices comprises the steps as described below.

At step 602, the method 600 comprises mounting thermoelectric device 107 on each of one or more contacts of a switchgear panel 100. The one or more contacts of the switchgear panel 100 transfer heat generated in the switchgear. The thermoelectric device comprises a first base and second base. The one or more contacts of the switchgear panel 100 in the switchgear includes a contact pin 106a, 106b that comprises at least two ends. One end of the contact pin 106a, 106b is connected to incoming/outgoing terminal 102,103 of a busbar system 101. Another end of the contact pin 106a,106b is connected to tulip cluster contact of incoming/outgoing terminal 104a,104b of moving contact of a circuit breaker 108. The moving contact of the circuit breaker 108 generates and transfers heat to the contact pin 106a, 106b. The contact pin 106a, 106b is at a hot region of the switchgear as the heat may also transferred from the busbar connections, related joints and high power current carrying links.

According to the second aspect of the invention, the step 602 of the method 600 further comprises mounting the thermoelectric device 107 in an inner periphery of a cavity provided in the contact pin 106a, 106b. The step 602 of method 600 comprises the steps as described below:

> At step 604, the method 600 further comprises positioning the first base of the thermoelectric device 107 towards the contact pin 106a, 106b.
> At step 606, the method 600 further comprises positioning the second base of the thermoelectric device 107 towards a region in the switchgear thereby to create the temperature difference on the first base and second base of the thermoelectric device 107. A temperature of the first base is higher than a temperature of the second base of the thermoelectric device 107. For example, the first base is a hot base, that releases heat energy, and whereas the second base is cold base that absorbs the heat energy. Further, the region in the switchgear is at a relatively low temperature when compared to temperature of the contact pin 106a, 106b;
> At step 614, the method 600 comprises creating temperature difference on the first base and second base of the thermoelectric device 107. Due to the creation of the temperature difference on the first base and second base of the thermoelectric device 107, an electric power (low voltage electric power) is generated by Seebeck effect.

At step 616, the method 600 further comprises providing a fan 105a, 105b for utilizing a generated electric power from the thermoelectric device 107 due to the temperature difference that is created (step 614) on the first base and second base of the thermoelectric device 107 by the Seebeck effect. The fan 105a, 105b and the thermoelectric device 107 is positioned in the cavity provided in the contact pin 106a, 106b. Further, the second base of the thermoelectric device 107 is positioned towards an outer periphery of the fan 105a, 105b to create the relatively low temperature when compared to the temperature of the contact pin 106a, 106b. The fan 105a, 105b is used to drive out the heat from the contact pin 106a, 106b and the tulip cluster (tulip fingers) contact 104a, 104b of the moving contact of the circuit breaker 108. The fan 105a, 105b is attached to a heat sink (not shown in figures) over a plurality of jumpers to drive-out the heat further away from the contact pin 106a, 106b. The plurality of jumpers (not shown in figures) are provided in between the at least one fan (105a, 105b) and the at least one contact pin (106a, 106b).

At step 618, the method 600 comprises removing heat from the one or more contacts of the switchgear panel 100. Further, the step 618 leads to removal of heat from the contact pin 106a, 106b and the moving contact of the circuit breaker 108.

The step 602 of the method 600 further comprises mounting the thermoelectric device 107 in an inner periphery of a cavity provided in the contact pin 106a, 106b and further comprises:

> At step 608, the method 600 further comprises connecting the thermoelectric device 107 that is mounted in the one or more contacts to an external power supply to create the temperature difference on the first base and second base of the thermoelectric device 107. Further, the thermoelectric device 107 that is mounted in the inner periphery of the cavity provided in the contact pin 106a, 106b is connected to an external power supply to create the temperature difference on the first base and second base of the thermoelectric device 107. A temperature of the first base is higher than a temperature of the second base of the thermoelectric device 107; For example, the first base is a hot base and that releases heat energy and whereas the second base is cold base that absorbs the heat energy.
> At step 610, the method 600 further comprises positioning the second base of the thermoelectric device 107 in the inner periphery of the cavity provided in the contact pin 106a,106b of the switchgear;
> At step 612, the method 600 further comprises positioning the first base of the thermoelectric device 107 towards a heat sink thereby to remove heat from the contact pin 106a,106b and the moving contact of the circuit breaker 108 by absorbing and releasing the heat generated in the switchgear by Peltier effect. The heat sink is attached on to jumpers provided over the contact pin 106a, 106b;

At step 614, the method 600 further comprises creating a temperature difference on the first base and second base of the thermoelectric device 107; and

At step 618, the method 600 further comprises removing heat from the one or more contacts of the switchgear panel 100. Further, the step 618 removes heat from the contact pin 106a, 106b and the moving contact of the circuit breaker 108.

According to an embodiment, the method 600 further comprises driving out the heat transferred at the one or more fixed contacts using a dielectric media that includes SF6, air, vacuum, other gases or fluids. The dielectric media can have a heat pipe in the switchgear panel (100) to drive-out the heat from the one or more contacts of the switchgear panel (100). In another aspect, the dielectric media may not have the heat pipe in the switchgear panel 100 to drive-out the heat from the one or more contacts of the switchgear panel 100. The method further comprises determining an operation of the thermoelectric device (107) and/or the fan (105a, 105b) externally by determining the temperature difference created in the thermoelectric device (107). Thus, heat transfer from the one or more contacts and/or the airflow can be enhanced with the implementation of the forced cooling using the fan and the temperature difference.

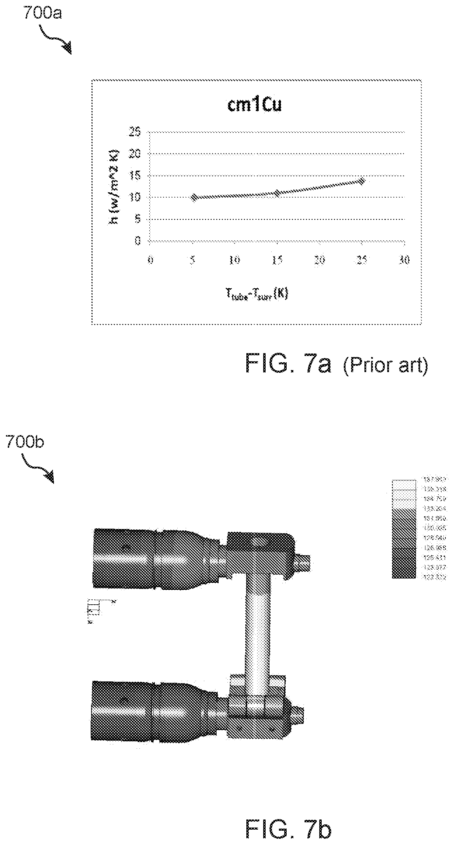

Fig.7a illustrates a graph 700a showing a variation of an average heat transfer coefficient in a free airflow condition with respect to temperature difference, according to a prior art reference. The graph illustrates the average heat transfer coefficient in the free convection for copper versus a temperatures difference. The temperature difference is obtained from a difference between a temperature of the conductor ($T_{tube}$ or $T_{cond}$) and a temperature of surrounding media ($T_{surr}$). A data related to the heat transfer coefficient are obtained from various experiments for aluminum copper and iron conductors. The heat transfer coefficient in free convection in the range for aluminum (13-21) w/m$^2$.K, copper (12-16) w/m$^2$.K and iron, (11-16)w/m$^2$.K. As a result, it is ensured that improvement in a surrounding airflow leads to better a heat transfer coefficient.

Fig.7b illustrates a simulation model 700b of an arrangement for correlating a heat transfer coefficient and surrounding temperature difference in the free airflow condition, according to a first aspect of an embodiment. A thermal simulation is performed to analyze effects of heat transfer coefficient and temperature of one or more contacts or conductors. The thermal simulation is performed using a known technique for simulations. Considering, the heat transfer coefficient as 10 (W/m$^2$.k) and a temperature difference between conducting surface and surrounding media varies from 5 °C to 10°C. Maximum absolute temperature can be observed in contact pin is 122 °C.

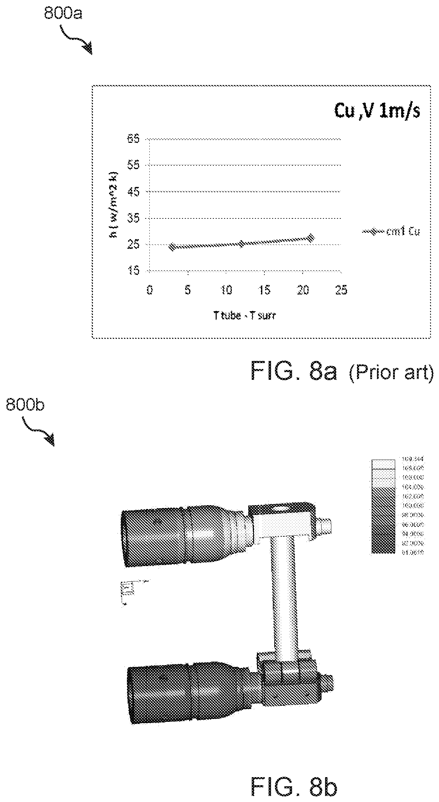

Fig.8a illustrates a graph 800a showing a variation of an average heat transfer coefficient with airflow of 1m/s with respect to temperature difference, according to a prior art reference. The graph illustrates the average heat transfer coefficient with the airflow 1m/s for copper versus a temperatures difference. The temperature difference is obtained from a difference between a temperature of the conductor ($T_{tube}$ or $T_{cond}$) and a temperature of surroundings ($T_{surr}$) of the conductor.

Fig.8b illustrates a simulation model 800b of an arrangement for correlating a heat transfer coefficient and surrounding temperature difference at airflow of 1m/s, according to a first aspect of an embodiment. A thermal simulation is performed to analyze effects of heat transfer coefficient and temperature of one or more contacts at forced airflow velocity 1m/s. Considering, the heat transfer coefficient as 22 (W/m$^2$.k) and a temperature difference between conducting surface and surrounding media varies from 5 °C to 10°C. Maximum absolute temperature can be observed in a contact pin is 91 °C. This consideration can be taken as implementation of a fan in an inner periphery of the contact pin operating with an airflow velocity of 1m/s.

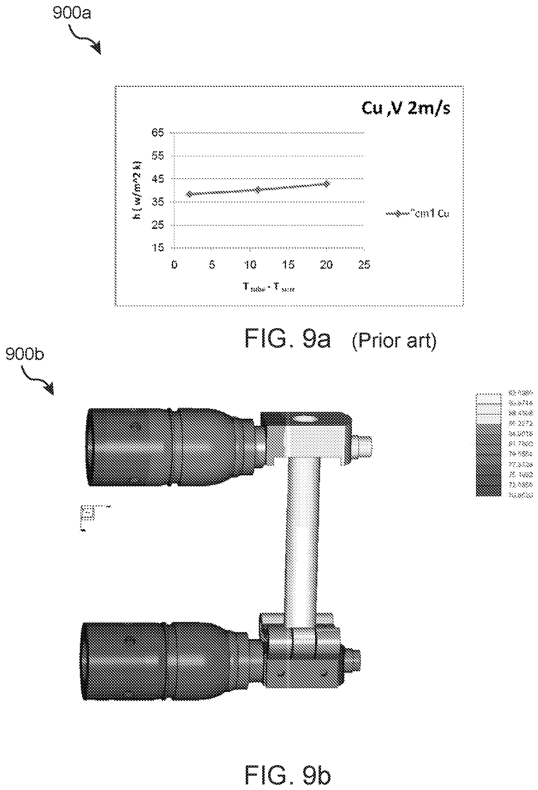

Fig.9a illustrates a graph 900a showing a variation of an average heat transfer coefficient with air flow of 2m/s with respect to temperature difference, according to a prior art reference. The graph illustrates the average heat transfer coefficient with the airflow 2m/s for copper versus a temperatures difference. The temperature difference is obtained from a difference between a temperature of the conductor ($T_{tube}$ or $T_{cond}$) and a temperature of surroundings ($T_{surr}$) of the conductor.

Fig.9b illustrates a simulation model 900b of an arrangement for correlating a heat transfer coefficient and surrounding temperature difference with the airflow of 2m/s, according to a first aspect of an embodiment. A thermal simulation is performed to analyze effects of heat transfer coefficient and temperature of one or more contacts at forced airflow velocity 2m/s. Considering, the heat transfer coefficient as 36 (W/m$^2$.k) and a temperature difference between conducting surface and surrounding media varies from 5 °C to 10°C. Maximum absolute temperature can be observed in a contact pin is 70 °C. This consideration can be taken as implementation of a fan in an inner periphery of the contact pin operating with an airflow velocity of 2m/s.

Fig.10a illustrates a graph 1000a showing a variation of an average heat transfer coefficient with air flow of 3m/s with respect to temperature difference, according to a prior art reference. The graph illustrates the average heat transfer coefficient with the airflow 3m/s for copper versus a temperatures difference. The temperature difference is obtained from a difference between a temperature of the conductor ($T_{tube}$ or $T_{cond}$) and a temperature of surroundings ($T_{surr}$) of the conductor. The heat transfer coefficient in a forced convection for aluminum has been found in the range (59-64) w/m$^2$.K and air velocity of 3 m/s. Corresponding values in forced convection heat transfer coefficient for copper and iron approximately falls between (60-65) w/m$^2$.K and (55-60) w/m$^2$.K respectively.

Fig.10b illustrates a simulation model 1000b of an arrangement for correlating a heat transfer coefficient and surrounding temperature difference at airflow of 3m/s, according to a first aspect of an embodiment. A thermal simulation is performed to analyze effects of heat transfer coefficient and temperature of one or more contacts at forced airflow velocity 3m/s. Considering, the heat transfer coefficient as 54 (W/m$^2$.k) and a temperature difference between conducting surface and surrounding media varies from 5 °C to 10°C. Maximum absolute temperature can be observed in a contact pin is 59 °C. This consideration can be taken as implementation of a fan in an inner periphery of the contact pin operating with an airflow velocity of 3m/s.

An advantage of the above-mentioned arrangement and method for controlling the temperature enhances heat transfer from one or more contacts (e.g. hot conductors, jumpers, busbar connections and the like) and/or the airflow and that leads to increase in the heat transfer coefficient. Further, loss due to the temperature rise in the switchgear can be controlled. In addition, from the design perspective, the arrangement for controlling the temperature is cost effective when compared to a conventional cooling arrangement. As there is no need for a bargain between high cross-sections, a size of a switchgear panel and critical distances for achieving a preferred dielectric performance. The arrangement improves overall performance of the switchgear.

**Claims**

1. An arrangement for controlling temperature in a switchgear using thermoelectric devices, the arrangement comprising:

   a switchgear panel (100) comprising a busbar system (101), a circuit breaker (108), and one or more contacts that transfer heat generated in the switchgear;
   at least one thermoelectric device (107) comprising a first base and a second base;
   wherein the at least one thermoelectric device (107) is mounted on each of the one or more contacts of the switchgear panel (100) to remove heat from the one or more contacts of the switchgear panel (100),
   **characterized in that**,
   the one or more contacts of the switchgear panel (100) include at least one contact pin (106a,106b); the at least one contact pin (106a,106b) comprises at least two ends;

   one end of the at least one contact pin (106a,106b) is connected to at least one incoming/outgoing terminal (102, 103) of the busbar system (101) and another end of the at least one contact pin (106a,106b) is connected to at least one tulip cluster contact of at least one incoming/outgoing terminal (104a, 104b) of at least one moving contact of the circuit breaker (108);
   the at least one moving contact of the circuit breaker (108) generates and transfers the heat to the at least one contact pin (106a, 106b) and the at least one contact pin (106a, 106b) is considered as a hot region of the switchgear, and **in that** the at least one thermoelectric device (107) is mounted in an inner periphery of a cavity provided in the at least one contact pin (106a, 106b).

2. The arrangement as claimed in claim 1, wherein the first base of the at least one thermoelectric device (107) is positioned towards the at least one contact pin (106a, 106b), and

   wherein the second base of the at least one thermoelectric device (107) is positioned towards a region in the switchgear, thereby to create the temperature difference on the first base and second base of the at least one thermoelectric device (107);
   wherein temperature of the first base is higher than temperature of the second base of the at least one thermoelectric device (107); and
   wherein the region in the switchgear is at a relatively low temperature when compared to temperature of the at least one contact pin (106a, 106b).

3. The arrangement as claimed in claim 2, wherein the arrangement further comprises at least one fan (105a,105b) activated using a generated electric power from the at least one thermoelectric device (107) due to the temperature difference that is created on the first base and second base of the at least one thermoelectric device (107) by Seebeck effect, and
   wherein the at least one fan (105a,105b) activates a forced cooling around the at least one contact pin (106a,106b) of the panel (100) and the at least one moving contact of the circuit breaker (108).

4. The arrangement as claimed in claim 3, wherein the at least one fan (105a,105b) is positioned in the cavity provided in the at least one contact pin (106a,106b) along with the at least one thermoelectric device (107);

   wherein the second base of the at least one thermoelectric device (107) is positioned towards an outer periphery of the at least one fan (105a,105b) to create the relatively low temperature when compared to the temperature of the at least one contact pin (106a,106b); and wherein the at least one fan (105a, 105b) is further attached to at least one heat sink over a plurality of jumpers to drive-out the heat further away from the at least one contact pin (106a, 106b) and the at least one tulip finger/cluster contact (104a, 104b); wherein the plurality of jumpers are provided in between the at least one fan (105a, 105b) and the at least one contact pin (106a, 106b).

5. The arrangement as claimed in claim 3 or 4, wherein the at least one fan (105a, 105b) is made of material that includes thermoplastic or metal alloys; and wherein the one or more contacts are made of material that includes aluminum, copper or metal alloys.

6. The arrangement as claimed in claim 1, wherein the at least one thermoelectric device (107) is connected to an external power supply to create the temperature difference on the first base and second base of the at least one thermoelectric device (107); and wherein temperature of the first base is higher than temperature of the second base of the at least one thermoelectric device (107).

7. The arrangement as claimed in claim 6, wherein the second base of the at least one thermoelectric device (107) is positioned in the inner periphery of the cavity provided in the at least one contact pin (106a, 106b) of the switchgear, and
the first base of the at least one thermoelectric device (107) is positioned towards at least one heat sink thereby to remove the heat from the at least one contact pin (106a,106b) and the at least one moving contact of the circuit breaker (108) by absorbing and releasing the heat generated in the switchgear by Peltier effect; wherein the at least one heat sink is attached on to a plurality of jumpers provided over the at least one contact pin 106a, 106b.

8. The arrangement as claimed in claim 1, wherein the heat transferred at the one or more contacts is driven-out using a dielectric media that includes SF6, air, vacuum, other gases or fluids; and wherein the dielectric media is used along with or without a heat pipe in the switchgear panel (100) to drive-out the heat from the one or more contacts of the switchgear panel (100).

9. The arrangement as claimed in claim 3, wherein a means provided in the switchgear to determine an operation of the at least one thermoelectric device (107) and/or the at least one fan (105a,105b) externally by determining the temperature difference created in the at least one thermoelectric device (107).

10. A method (600) for controlling temperature in a switchgear using thermoelectric devices, the method comprising the steps of,

mounting (601) at least one thermoelectric device (107) on each of one or more contacts of a switchgear panel (100), wherein the switchgear panel (100) comprises a busbar system (101) and a circuit breaker (108); wherein the one or more contacts of the switchgear panel (100) transfer heat generated in the switchgear; wherein the at least one thermoelectric device comprises a first base and a second base; and removing (604) heat from the one or more contacts of the switchgear panel (100),
wherein the one or more contacts of the switchgear panel (100) in the switchgear includes at least one contact pin (106a, 106b); wherein the at least one contact pin (106a, 106b) comprises at least two ends; and
wherein one end of the at least one contact pin (106a, 106b) is connected to at least one incoming/outgoing terminal (102, 103) of the busbar system (101) and another end of the at least one contact pin (106a, 106b) is connected to at least one tulip cluster contact of at least one incoming/outgoing terminal (104a, 104b) of at least one moving contact of the circuit breaker (108); and wherein the at least one moving contact of the circuit breaker (108) generates and transfers the heat to the at least one contact pin (106a, 106b); and wherein the at least one contact pin (106a, 106b) is at a hot region of the switchgear, wherein the method further comprising, mounting the at least one thermoelectric device (107) in an inner periphery of a cavity provided in the at least one contact pin (106a, 106b).

11. The method as claimed in claim 10, wherein mounting the at least one thermoelectric device (107) further comprises:

positioning the first base of the at least one thermoelectric device (107) towards the at least one contact pin (106a, 106b); and
positioning the second base of the at least one thermoelectric device (107) towards a region in the switchgear thereby to create the temperature difference on the first base and second base of the at least one thermoelectric device (107); wherein temperature of the first base is higher than temperature of the second base of the at least one thermoelectric device (107); wherein the region in the switchgear is at a relatively low temperature when compared to temperature of the at least one contact pin (106a, 106b).

**12.** The method as claimed in claim 11, wherein the method further comprises:

> providing at least one fan (105a,105b) for utilizing a generated electric power from the at least one thermoelectric device (107) due to the temperature difference that is created on the first base and second base of the at least one thermoelectric device (107) by Seebeck effect; and activating the forced cooling around the at least one contact pin (106a,106b) and the at least one moving contact of the circuit breaker (108).

**13.** The method as claimed in claim 10, wherein the method further comprises:

> connecting the at least one thermoelectric device (107) that is mounted in the inner periphery of the cavity provided in the at least one contact pin (106a, 106b) to an external power supply to create the temperature difference on the first base and second base of the at least one thermoelectric device (107); and wherein temperature of the first base is higher than temperature of the second base of the at least one thermoelectric device (107).
>
> wherein the mounting the at least one thermoelectric device (107) in the inner periphery of the cavity provided in the at least one contact pin 106a, 106b) comprises:
>
>> positioning the second base of the at least one thermoelectric device (107) in the inner periphery of the cavity provided in the at least one contact pin (106a, 106b) of the switchgear, and
>> positioning the first base of the at least one thermoelectric device (107) towards at least one heat sink thereby to remove the heat from the at least one contact pin (106a,106b) and the at least one moving contact of the circuit breaker (108) by absorbing and releasing the heat generated in the switchgear by Peltier effect; wherein the at least one heat sink is attached on to a plurality of jumpers provided over the at least one contact pin 106a, 106b.

**Patentansprüche**

**1.** Anordnung zum Regeln einer Temperatur in einer Schaltanlage unter Verwendung thermoelektrischer Geräte, wobei die Anordnung Folgendes umfasst:

> ein Schaltanlagenfeld (100), das ein Sammelschienensystem (101), einen Leistungsschalter (108) und einen oder mehrere Kontakte umfasst, die in der Schaltanlage erzeugte Wärme übertragen;
> mindestens ein thermoelektrisches Gerät (107), das eine erste Basis und eine zweite Basis umfasst;
> wobei das mindestens eine thermoelektrische Gerät (107) an jedem des einen oder der mehreren Kontakte des Schaltanlagenfelds (100) montiert ist, um Wärme von dem einen oder den mehreren Kontakten des Schaltanlagenfelds (100) zu entfernen,
> **dadurch gekennzeichnet, dass**
> der eine oder die mehreren Kontakte des Schaltanlagenfelds (100) mindestens einen Kontaktstift (106a, 106b) aufweisen; der mindestens eine Kontaktstift (106a, 106b) mindestens zwei Enden umfasst;
> ein Ende des mindestens einen Kontaktstifts (106a, 106b) mit mindestens einem eingehenden/ausgehenden Anschluss (102, 103) des Sammelschienensystems (101) verbunden ist und ein anderes Ende des mindestens einen Kontaktstifts (106a, 106b) mit mindestens einem Fangtaschenbündelkontakt mindestens eines eingehenden/ausgehenden Anschlusses (104a, 104b) mindestens eines beweglichen Kontakts des Leistungsschalters (108) verbunden ist;
> der mindestens eine bewegliche Kontakt des Leistungsschalters (108) die Wärme erzeugt und auf den mindestens einen Kontaktstift (106a, 106b) überträgt und der mindestens eine Kontaktstift (106a, 106b) als ein heißer Bereich der Schaltanlage betrachtet wird,
> und dadurch, dass
> das mindestens eine thermoelektrische Gerät (107) in einem Innenumfang eines Hohlraums montiert ist, der in dem mindestens einen Kontaktstift (106a, 106b) bereitgestellt ist.

**2.** Anordnung nach Anspruch 1, wobei die erste Basis des mindestens einen thermoelektrischen Geräts (107) zu dem mindestens einen Kontaktstift (106a, 106b) hin angeordnet ist und

> wobei die zweite Basis des mindestens einen thermoelektrischen Geräts (107) zu einem Bereich in der Schaltanlage hin angeordnet ist, um dadurch die Temperaturdifferenz auf der ersten Basis und der zweiten Basis des mindestens einen thermoelektrischen Geräts (107) zu erzeugen;
> wobei die Temperatur der ersten Basis höher als die Temperatur der zweiten Basis des mindestens einen thermoelektrischen Geräts (107) ist; und wobei der Bereich in der Schaltanlage eine relativ niedrige Temperatur im Vergleich zu der Temperatur des mindestens einen Kontaktstifts (106a, 106b) aufweist.

3. Anordnung nach Anspruch 2, wobei die Anordnung ferner mindestens ein Gebläse (105a, 105b) umfasst, das unter Verwendung eines erzeugten elektrischen Stroms aus dem mindestens einen thermoelektrischen Gerät (107) aufgrund der Temperaturdifferenz aktiviert wird, die auf der ersten Basis und der zweiten Basis des mindestens einen thermoelektrischen Geräts (107) durch den Seebeck-Effekt erzeugt wird, und
wobei das mindestens eine Gebläse (105a, 105b) eine Zwangskühlung um den mindestens einen Kontaktstift (106a, 106b) des Felds (100) und den mindestens einen beweglichen Kontakt des Leistungsschalters (108) herum aktiviert.

4. Anordnung nach Anspruch 3, wobei das mindestens eine Gebläse (105a, 105b) in dem Hohlraum angeordnet ist, der in dem mindestens einen Kontaktstift (106a, 106b) zusammen mit dem mindestens einen thermoelektrischen Gerät (107) bereitgestellt ist;

> wobei die zweite Basis des mindestens einen thermoelektrischen Geräts (107) zu einem Außenumfang des mindestens einen Gebläses (105a, 105b) hin angeordnet ist, um die relativ niedrige Temperatur im Vergleich zu der Temperatur des mindestens einen Kontaktstifts (106a, 106b) zu erzeugen; und
> wobei das mindestens eine Gebläse (105a, 105b) ferner an mindestens einer Wärmesenke über mehrere Überbrückungen angebracht ist, um die Wärme weiter weg von dem mindestens einen Kontaktstift (106a, 106b) und dem mindestens einen Fangtaschenfinger-/-bündelkontakt (104a, 104b) zu treiben; wobei die mehreren Überbrückungen zwischen dem mindestens einen Gebläse (105a, 105b) und dem mindestens einen Kontaktstift (106a, 106b) bereitgestellt sind.

5. Anordnung nach Anspruch 3 oder 4, wobei das mindestens eine Gebläse (105a, 105b) aus einem Material hergestellt ist, das Thermoplast oder Metalllegierungen umfasst; und wobei der eine oder die mehreren Kontakte aus einem Material hergestellt sind, das Aluminium, Kupfer oder Metalllegierungen umfasst.

6. Anordnung nach Anspruch 1, wobei das mindestens eine thermoelektrische Gerät (107) mit einer externen Stromversorgung verbunden ist, um die Temperaturdifferenz auf der ersten Basis und der zweiten Basis des mindestens einen thermoelektrischen Geräts (107) zu erzeugen; und wobei die Temperatur der ersten Basis höher als die Temperatur der zweiten Basis des mindestens einen thermoelektrischen Geräts (107) ist.

7. Anordnung nach Anspruch 6, wobei die zweite Basis des mindestens einen thermoelektrischen Geräts (107) in dem Innenumfang des Hohlraums angeordnet ist, der in dem mindestens einen Kontaktstift (106a, 106b) der Schaltanlage bereitgestellt ist, und die erste Basis des mindestens einen thermoelektrischen Geräts (107) zu mindestens einer Wärmesenke hin angeordnet ist, um dadurch die Wärme aus dem mindestens einen Kontaktstift (106a, 106b) und dem mindestens einen beweglichen Kontakt des Leistungsschalters (108) zu entfernen, indem die Wärme, die in der Schaltanlage durch den Peltier-Effekt erzeugt wird, absorbiert und freigesetzt wird; wobei die mindestens eine Wärmesenke an mehreren Überbrückungen angebracht ist, die über dem mindestens einen Kontaktstift (106a, 106b) bereitgestellt sind.

8. Anordnung nach Anspruch 1, wobei die Wärme, die an dem einen oder den mehreren Kontakten übertragen wird, unter Verwendung eines dielektrischen Mediums, das SF6, Luft, Vakuum, andere Gase oder Fluide umfasst, ausgetrieben wird; und wobei das dielektrische Medium zusammen mit einem oder ohne ein Wärmerohr in dem Schaltanlagenfeld (100) verwendet wird, um die Wärme aus dem einen oder den mehreren Kontakten des Schaltanlagenfelds (100) auszutreiben.

9. Anordnung nach Anspruch 3, wobei ein Mittel, das in der Schaltanlage bereitgestellt ist, um einen Betrieb des mindestens einen thermoelektrischen Geräts (107) und/oder des mindestens einen Gebläses (105a, 105b) extern durch Bestimmen der Temperaturdifferenz zu bestimmen, die in dem mindestens einen thermoelektrischen Gerät (107) erzeugt wird.

10. Verfahren (600) zum Steuern der Temperatur in einer Schaltanlage unter Verwendung von thermoelektrischen Geräten, wobei das Verfahren die folgenden Schritte umfasst:

> Montieren (601) mindestens eines thermoelektrischen Geräts (107) an jedem von einem oder mehreren Kontakten eines Schaltanlagenfelds (100), wobei das Schaltanlagenfeld (100) ein Sammelschienensystem (101) und einen Leistungsschalter (108) umfasst; wobei der eine oder die mehreren Kontakte des Schaltanlagenfelds (100) in der Schaltanlage erzeugte Wärme übertragen; wobei das mindestens eine thermoelektrische Gerät eine erste Basis und eine zweite Basis umfasst; und
> Entfernen (604) von Wärme aus dem einen oder den mehreren Kontakten des Schaltanlagenfelds (100),

wobei der eine oder die mehreren Kontakte des Schaltanlagenfelds (100) in der Schaltanlage mindestens einen Kontaktstift (106a, 106b) aufweisen; wobei der mindestens eine Kontaktstift (106a, 106b) mindestens zwei Enden umfasst; und

wobei ein Ende des mindestens einen Kontaktstifts (106a, 106b) mit mindestens einem eingehenden/ausgehenden Anschluss (102, 103) des Sammelschienensystems (101) verbunden ist und ein anderes Ende des mindestens einen Kontaktstifts (106a, 106b) mit mindestens einem Fangtaschenbündelkontakt mindestens eines eingehenden/ausgehenden Anschlusses (104a, 104b) mindestens eines beweglichen Kontakts des Leistungsschalters (108) verbunden ist; und

wobei der mindestens eine bewegliche Kontakt des Leistungsschalters (108) die Wärme erzeugt und auf den mindestens einen Kontaktstift (106a, 106b) überträgt und wobei der mindestens eine Kontaktstift (106a, 106b) in einem heißen Bereich der Schaltanlage ist,

wobei das Verfahren ferner Montieren des mindestens einen thermoelektrischen Geräts (107) in einem Innenumfang eines Hohlraums, der in dem mindestens einen Kontaktstift (106a, 106b) bereitgestellt ist, umfasst.

11. Verfahren nach Anspruch 10, wobei Montieren des mindestens einen thermoelektrischen Geräts (107) ferner Folgendes umfasst:

Anordnen der ersten Basis des mindestens einen thermoelektrischen Geräts (107) zu dem mindestens einen Kontaktstift (106a, 106b) hin; und

Anordnen der zweiten Basis des mindestens einen thermoelektrischen Geräts (107) zu einem Bereich in der Schaltanlage hin, um dadurch die Temperaturdifferenz auf der ersten Basis und der zweiten Basis des mindestens einen thermoelektrischen Geräts (107) zu erzeugen;

wobei die Temperatur der ersten Basis höher als die Temperatur der zweiten Basis des mindestens einen thermoelektrischen Geräts (107) ist;

wobei der Bereich in der Schaltanlage eine relativ niedrige Temperatur im Vergleich zu der Temperatur des mindestens einen Kontaktstifts (106a, 106b) aufweist.

12. Verfahren nach Anspruch 11, wobei das Verfahren weiterhin Folgendes umfasst:

Bereitstellen des mindestens einen Gebläses (105a, 105b) zum Einsetzen eines erzeugten elektrischen Stroms aus dem mindestens einen thermoelektrischen Gerät (107) aufgrund der Temperaturdifferenz, die auf der ersten Basis und der zweiten Basis des mindestens einen thermoelektrischen Geräts (107) durch den Seebeck-Effekt erzeugt wird; und

Aktivieren der Zwangskühlung um den mindestens einen Kontaktstift (106a, 106b) und den mindestens einen beweglichen Kontakt des Leistungsschalters (108) herum.

13. Verfahren nach Anspruch 10, wobei das Verfahren weiterhin Folgendes umfasst:

Verbinden des mindestens einen thermoelektrischen Geräts (107), das in dem Innenumfang des Hohlraums montiert ist, der in dem mindestens einen Kontaktstift (106a, 106b) bereitgestellt ist, mit einer externen Stromversorgung, um die Temperaturdifferenz auf der ersten Basis und der zweiten Basis des mindestens einen thermoelektrischen Geräts (107) zu erzeugen; und wobei die Temperatur der ersten Basis höher als die Temperatur der zweiten Basis des mindestens einen thermoelektrischen Geräts (107) ist.

wobei das Montieren des mindestens einen thermoelektrischen Geräts (107) in dem Innenumfang des Hohlraums, der in dem mindestens einen Kontaktstift (106a, 106b) bereitgestellt ist, Folgendes umfasst:

Anordnen der zweiten Basis des mindestens einen thermoelektrischen Geräts (107) in dem Innenumfang des Hohlraums, der in dem mindestens einen Kontaktstift (106a, 106b) der Schaltanlage bereitgestellt ist, und

Anordnen der ersten Basis des mindestens einen thermoelektrischen Geräts (107) zu mindestens einer Wärmesenke hin, um dadurch die Wärme aus dem mindestens einen Kontaktstift (106a, 106b) und dem mindestens einen beweglichen Kontakt des Leistungsschalters (108) zu entfernen, indem die Wärme, die in der Schaltanlage durch den Peltier-Effekt erzeugt wird, absorbiert und freigesetzt wird; wobei die mindestens eine Wärmesenke an mehreren Überbrückungen angebracht ist, die über dem mindestens einen Kontaktstift (106a, 106b) bereitgestellt sind.

**Revendications**

1. Agencement pour contrôler une température dans un appareillage de commutation en utilisant des dispositifs thermoélectriques, l'agencement comprenant :

un panneau d'appareillage de commutation (100) comprenant un système de barre omnibus (101), un disjoncteur (108), et un ou plusieurs contacts qui transfèrent de la chaleur générée dans l'appareillage de commutation ;

au moins un dispositif thermoélectrique (107) comprenant une première base et une seconde base ;

dans lequel l'au moins un dispositif thermoélectrique (107) est monté sur chacun de l'un ou des plusieurs contacts du panneau d'appareillage de commutation (100) pour éliminer de la chaleur de l'un ou des plusieurs contacts du panneau d'appareillage de commutation (100),

**caractérisé en ce que**

l'un ou les plusieurs contacts du panneau d'appareillage de commutation (100) incluent au moins une broche de contact (106a,106b) ;

l'au moins une broche de contact (106a,106b) comprend au moins deux extrémités ;

une extrémité de l'au moins une broche de contact (106a,106b) est connectée à au moins une borne d'entrée/de sortie (102, 103) du système de barre omnibus (101) et une autre extrémité de l'au moins une broche de contact (106a,106b) est connectée à au moins un contact faisceau tulipe d'au moins une borne d'entrée/de sortie (104a, 104b) d'au moins un contact mobile du disjoncteur (108) ;

l'au moins un contact mobile du disjoncteur (108) génère et transfère la chaleur à l'au moins une broche de contact (106a, 106b) et l'au moins une broche de contact (106a, 106b) est considérée comme étant une région chaude de l'appareillage de commutation,

et **en ce que**

l'au moins un dispositif thermoélectrique (107) est monté dans une périphérie intérieure d'une cavité prévue dans l'au moins une broche de contact (106a, 106b).

2. Agencement tel que revendiqué dans la revendication 1, dans lequel la première base de l'au moins un dispositif thermoélectrique (107) est positionnée vers l'au moins une broche de contact (106a, 106b), et

dans lequel la seconde base de l'au moins un dispositif thermoélectrique (107) est positionnée vers une région dans l'appareillage de commutation, pour ainsi créer la différence de température sur la première base et la seconde base de l'au moins un dispositif thermoélectrique (107) ;

dans lequel la température de la première base est plus haute que la température de la seconde base de l'au moins un dispositif thermoélectrique (107) ; et dans lequel la région dans l'appareillage de commutation est à une température relativement basse par comparaison à la température de l'au moins une broche de contact (106a, 106b).

3. Agencement tel que revendiqué dans la revendication 2, dans lequel l'agencement comprend en outre au moins un ventilateur (105a,105b) activé en utilisant une énergie électrique générée depuis l'au moins un dispositif thermoélectrique (107) en raison de la différence de température qui est créée sur la première base et la seconde base de l'au moins un dispositif thermoélectrique (107) par effet Seebeck, et dans lequel l'au moins un ventilateur (105a,105b) active un refroidissement forcé autour de l'au moins une broche de contact (106a,106b) du panneau (100) et de l'au moins un contact mobile du disjoncteur (108).

4. Agencement tel que revendiqué dans la revendication 3, dans lequel l'au moins un ventilateur (105a,105b) est positionné dans la cavité prévue dans l'au moins une broche de contact (106a,106b) conjointement avec l'au moins un dispositif thermoélectrique (107) ;

dans lequel la seconde base de l'au moins un dispositif thermoélectrique (107) est positionnée vers une périphérie extérieure de l'au moins un ventilateur (105a,105b) pour créer la température relativement basse par comparaison à la température de l'au moins une broche de contact (106a,106b) ; et

dans lequel l'au moins un ventilateur (105a, 105b) est en outre fixé à au moins un dissipateur de chaleur par le biais d'une pluralité de cavaliers pour expulser la chaleur plus loin de l'au moins une broche de contact (106a, 106b) et de l'au moins un contact doigt/faisceau tulipe (104a, 104b) ; dans lequel la pluralité de cavaliers sont prévus entre l'au moins un ventilateur (105a, 105b) et l'au moins une broche de contact (106a, 106b).

5. Agencement tel que revendiqué dans la revendication 3 ou 4, dans lequel l'au moins un ventilateur (105a, 105b) est fait de matériau qui inclut un thermoplastique ou des alliages métalliques ; et dans lequel l'un ou les plusieurs contacts sont faits de matériau qui inclut de l'aluminium, du cuivre, et des alliages métalliques.

6. Agencement tel que revendiqué dans la revendication 1, dans lequel l'au moins un dispositif thermoélectrique (107) est connecté à une alimentation en énergie externe pour créer la différence de température sur la première base et la seconde base de l'au moins un dispositif thermoélectrique (107) ; et dans lequel la température de la première base est plus haute que la température de la seconde base de l'au moins un dispositif thermoélectrique (107).

7. Agencement tel que revendiqué dans la revendication 6, dans lequel la seconde base de l'au moins un dispositif thermoélectrique (107) est positionnée dans la périphérie intérieure de la cavité prévue dans l'au moins une broche de contact (106a, 106b) de l'appareillage de commutation, et
la première base de l'au moins un dispositif thermoélectrique (107) est positionnée vers au moins un dissipateur de chaleur ainsi pour éliminer la chaleur de l'au moins une broche de contact (106a,106b) et de l'au moins un contact mobile du disjoncteur (108) en absorbant et libérant la chaleur générée dans l'appareillage de commutation par effet Peltier ; dans lequel l'au moins un dissipateur de chaleur est fixé sur une pluralité de cavaliers prévus par-dessus l'au moins une broche de contact (106a, 106b).

8. Agencement tel que revendiqué dans la revendication 1, dans lequel la chaleur transférée au niveau de l'un ou des plusieurs contacts est expulsée en utilisant une matière diélectrique qui inclut du SF6, de l'air, un vide, d'autres gaz ou fluides ; et dans lequel la matière diélectrique est utilisée conjointement avec ou sans caloduc dans le panneau d'appareillage de commutation (100) pour expulser la chaleur depuis l'un ou les plusieurs contacts du panneau d'appareillage de commutation (100).

9. Agencement tel que revendiqué dans la revendication 3, dans lequel un moyen est prévu dans l'appareillage de commutation pour déterminer un fonctionnement de l'au moins un dispositif thermoélectrique (107) et/ou de l'au moins un ventilateur (105a,105b) de façon externe en déterminant la différence de température créée dans l'au moins un dispositif thermoélectrique (107).

10. Procédé (600) pour contrôler une température dans un appareillage de commutation en utilisant des dispositifs thermoélectriques, le procédé comprenant les étapes suivantes

le montage (601) d'au moins un dispositif thermoélectrique (107) sur chacun d'un ou plusieurs contacts d'un panneau d'appareillage de commutation (100), dans lequel le panneau d'appareillage de commutation (100) comprend un système de barre omnibus (101) et un disjoncteur (108) ; dans lequel l'un ou les plusieurs contacts du panneau d'appareillage de commutation (100) transfèrent de la chaleur générée dans l'appareillage de commutation ; dans lequel l'au moins un dispositif thermoélectrique comprend une première base et une seconde base ; et
l'élimination (604) de chaleur de l'un ou des plusieurs contacts du panneau d'appareillage de commutation (100), dans lequel l'un ou les plusieurs contacts du panneau d'appareillage de commutation (100) dans l'appareillage de commutation inclut au moins une broche de contact (106a, 106b) ; dans lequel l'au moins une broche de contact (106a, 106b) comprend au moins deux extrémités ; et
dans lequel une extrémité de l'au moins une broche de contact (106a, 106b) est connectée à au moins une borne d'entrée/de sortie (102, 103) du système de barre omnibus (101) et une autre extrémité de l'au moins une broche de contact (106a, 106b) est connectée à au moins un contact faisceau tulipe d'au moins une borne d'entrée/de sortie (104a, 104b) d'au moins un contact mobile du disjoncteur (108) ; et
dans lequel l'au moins un contact mobile du disjoncteur (108) génère et transfère la chaleur à l'au moins une broche de contact (106a, 106b) ; et dans lequel l'au moins une broche de contact (106a, 106b) est dans une région chaude de l'appareillage de commutation, dans lequel le procédé comprenant en outre, le montage de l'au moins un dispositif thermoélectrique (107) dans une périphérie intérieure d'une cavité prévue dans l'au moins une broche de contact (106a, 106b).

11. Procédé tel que revendiqué dans la revendication 10, dans lequel le montage de l'au moins un dispositif thermoélectrique (107) comprend en outre :

le positionnement de la première base de l'au moins un dispositif thermoélectrique (107) vers l'au moins une broche de contact (106a, 106b) ; et
le positionnement de la seconde base de l'au moins un dispositif thermoélectrique (107) vers une région dans l'appareillage de commutation pour ainsi créer la différence de température sur la première base et la seconde base de l'au moins un dispositif thermoélectrique (107) ;
dans lequel la température de la première base est plus haute que la température de la seconde base de l'au moins un dispositif thermoélectrique (107) ; dans lequel la région dans l'appareillage de commutation est à une température relativement basse par comparaison à la température de l'au moins une broche de contact (106a, 106b).

12. Procédé tel que revendiqué dans la revendication 11, dans lequel le procédé comprend en outre :

la fourniture d'au moins un ventilateur (105a,105b) pour utiliser une énergie électrique générée depuis l'au moins un dispositif thermoélectrique (107) en raison de la différence de température qui est créée sur la première base et la seconde base de l'au moins un dispositif thermoélectrique (107) par effet Seebeck ; et l'activation du refroidissement forcé autour de l'au moins une broche de contact (106a,106b) et de l'au moins un contact mobile du disjoncteur (108).

13. Procédé tel que revendiqué dans la revendication 10, dans lequel le procédé comprend en outre :

la connexion de l'au moins un dispositif thermoélectrique (107) qui est monté dans la périphérie intérieure de la cavité prévue dans l'au moins une broche de contact (106a, 106b) à une alimentation en énergie externe pour créer la différence de température sur la première base et la seconde base de l'au moins un dispositif thermoélectrique (107) ; et dans lequel la température de la première base est plus haute que la température de la seconde base de l'au moins un dispositif thermoélectrique (107), dans lequel le montage de l'au moins un dispositif thermoélectrique (107) dans la périphérie intérieure de la cavité prévue dans l'au moins une broche de contact (106a, 106b) comprend :

le positionnement de la seconde base de l'au moins un dispositif thermoélectrique (107) dans la périphérie intérieure de la cavité prévue dans l'au moins une broche de contact (106a, 106b) de l'appareillage de commutation, et le positionnement de la première base de l'au moins un dispositif thermoélectrique (107) vers au moins un dissipateur de chaleur ainsi pour éliminer la chaleur de l'au moins une broche de contact (106a,106b) et de l'au moins un contact mobile du disjoncteur (108) en absorbant et libérant la chaleur générée dans l'appareillage de commutation par effet Peltier ; dans lequel l'au moins un dissipateur de chaleur est fixé sur une pluralité de cavaliers prévus par-dessus l'au moins une broche de contact (106a, 106b).

FIG. 1

200

205

**FIG. 2**

300

302R

302B

302Y

305R

306R

309R

305B

306B

309B

305Y

306Y

309Y

**FIG. 3**

FIG. 4

FIG. 5

600

Mounting a thermoelectric device suitably in one or more contact of a switchgear panel ⌐602

Positioning a first base of the thermoelectric device towards a contact pin ⌐604

Connecting the thermoelectric device to an external power supply ⌐608

Positioning a second base of the thermoelectric device towards a region ⌐606

Positioning a second base of the thermoelectric device towards the contact pin ⌐610

Positioning a first base of the thermoelectric device towards a heat sink ⌐612

Creating a temperature difference on bases of the thermoelectric device ⌐614

Providing a fan for utilizing a generated electric power from the thermoelectric device ⌐616

Removing heat from the one or more contacts of the switchgear panel ⌐618

FIG. 6

700a

FIG. 7a (Prior art)

700b

FIG. 7b

FIG. 8a (Prior art)

FIG. 8b

900a

FIG. 9a (Prior art)

900b

FIG. 9b

1000a

FIG. 10a (Prior art)

1000b

FIG. 10b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020209509 A1
- KR 101226635 B1

- WO 2016116410 A1